# EUROPÄISCHE PATENTSCHRIFT

(11) **EP 1 716 015 B1**
(45) Veröffentlichungstag und Bekanntmachung des Hinweises auf die Patenterteilung: **07.11.2007**
(21) Anmeldenummer: 05706684.7
(22) Anmeldetag: 15.01.2005
(51) Int. Cl.: B60J 7/12, B60J 7/20

(54) **CABRIOLET-FAHRZEUG**
CABRIOLET
CABRIOLET

(30) Priorität: 20.01.2004 DE 102004003020
(43) Veröffentlichungstag der Anmeldung: 02.11.2006
(73) Patentinhaber: Wilhelm Karmann GmbH, 49084 Osnabrück (DE)
(72) Erfinder: KREILING, Nils, 49078 Osnabrück (DE)
(86) Internationale Anmeldenummer: PCT/DE2005/000053
(87) Internationale Veröffentlichungsnummer: WO 2005/068237

(56) Entgegenhaltungen:
- DE-A1- 3 416 286
- DE-A1- 4 336 278
- DE-A1- 19 801 876
- US-A- 5 810 422

## Beschreibung

Die Erfindung betrifft ein Cabriolet-Fahrzeug mit einem zumindest bereichsweise mit einem flexiblen Bezug versehenen Dach nach dem Oberbegriff der Ansprüche 1 und 3. Ein solches Fahrzeug ist aus der DE 19801876 A bekannt.

Es ist bekannt, daß bei einem Cabriolet-Fahrzeug der genannten Art der vordere Dachbereich bei geöffnetem Dach mit der starren Dachspitze nach Art eines Deckels über weiteren Bereichen des Daches liegt und von oben offen sichtbar bleibt. Das Dach liegt dann in einer Karosserieausnehmung, die in die Karosserieaußenfläche eingelassen ist. Diese umgibt die Ausnehmung zumindest seitlich und hinten. Vorne schließt sich mittelbar oder häufig unmittelbar ein Insassenraum an.

Dabei ist einerseits für einen harmonischen Übergang der die Ausnehmung begrenzenden Kanten möglichst die hintere Begrenzung der Ausnehmung, die eine Vorderkante der weiter nach hinten anschließenden Karosserieaußenfläche darstellt, in einer Kurvenform ausgebildet, die zu den Fahrzeugseiten hin nach vorne weist. Funktional ist dieses auch für eine möglichst große Zugangsöffnung unterhalb einer nach hinten anschließenden Kofferraumklappe wünschenswert, die mit ihrer in Fahrtrichtung vorderen Begrenzungslinie parallel zur Vorderkante, die die Ausnehmung begrenzt, liegen soll.

Andererseits soll ein Dach der genannten Art bei seiner Öffnung hinter dem starr untergriffenen vorderen Dachbereich derart einfalten, daß die dort liegende Faltkante möglichst über die Dachbreite in Draufsicht zumindest nahezu geradlinig im 90°-Winkel zur Fahrtrichtung verläuft, um einen sauberen Bezugverlauf bei geschlossenem Dach ohne zusätzliche Stofflosebereiche oder Falten sicherzustellen.

Somit ergibt sich an der hinteren Kante der Begrenzung der Ausnehmung zumindest in den seitlichen Eckbereichen ein Konflikt zwischen der geradlinigen hinteren Kante des dann oben liegenden vorderen Dachteils und der an den Querseiten nach vorne eingezogenen Begrenzungskante der Ausnehmung. Wenn daher die Ecken des vorderen Dachteils bei der Dachbewegung an der Kante kollisionsfrei vorbeigeführt werden sollen, ist ein erheblicher Abstand zwischen den Teilen erforderliche. Dadurch verbleibt zumindest im Bereich der vertikalen Fahrzeuglängsmittelebene ein in Fahrzeuglängsrichtung lang erstreckter Spalt zwischen der Kante der Ausnehmung und der hinten gelegenen Faltkante des vorderen Dachteils. Derartige Spalte sind jedoch optisch unerwünscht und ermöglichen ohne weitere Maßnahmen auch einen unbefugten Zugriff in den darunter liegenden Kofferraum.

Die DE 198 01 876 A1 zeigt ein Dach, bei dem die hinten liegende Faltkante des vorderen Dachbereichs an die Kurvatur der hinteren Kante der Begrenzung angepaßt, ebenfalls gekrümmt ist und daher nicht über die Dachbreite in Draufsicht geradlinig im 90°-Winkel zur Fahrtrichtung verläuft.

Ein weiterer Versuch, den o. g. Konflikt zu umgehen, liegt darin, für den hinteren Endbereich der Ausnehmung einen schmalen, in Draufsicht annähernd sichelförmigen beweglichen Schwenkdeckel vorzusehen, dessen hintere Kante im wesentlichen quer zum Fahrzeug liegt und dessen vordere Kante in der gewünschten Kurvatur mit nach vorne eingezogenen Bereichen liegt. Ein solcher bewegter Deckel ist in der DE 43 36 378 A1 gezeigt.

Der Erfindung liegt das Problem zugrunde, die Ablage eines Daches mit in Ablagestellung in gleicher Orientierung wie in geschlossener Stellung liegendem vorderem Dachteil zu optimieren.

Die Erfindung löst dieses Problem durch ein Cabriolet-Fahrzeug mit den Merkmalen des Anspruchs 1 sowie durch ein Cabriolet-Fahrzeug mit den Merkmalen des Anspruchs 3, die einzeln oder vorteilhaft in Kombination miteinander verwirklicht sein können. Hinsichtlich weiterer vorteilhafter Ausgestaltungen der Erfindung wird auf die Ansprüche 2 und 4 bis 8 verwiesen.

Erfindungsgemäß ist in der Ausbildung nach Anspruch 1 der Spalt durch die von einer flexiblen Verkleidung überdeckbare Unterstützungsstufe verkleinert. Bewegte Deckelteile jeglicher Art sind dadurch entbehrlich. Sowohl optisch als auch als Sicherung gegen ein Eingreifen ist damit eine Verbesserung erreicht.

Der Herstellungs- und Teileaufwand ist dabei besonders gering, wenn die Unterstützungsstufe als einstückiges Formteil ausgebildet ist.

Die Ausbildung nach Anspruch 3, nach der die Verkleidung als ein textiler Behang ausgebildet ist, der über einen großen Teil der Breite der Ausnehmung und am hinteren Ende des beweglichen Daches gehalten ist, stellt eine zuverlässige und flexibel bewegliche Spaltverkleinerung sicher. Insbesondere kann eine Kombination der Ansprüche 1 und 3 vorteilhaft sein, nach der der Behang die Unterstützungsstufe bei geöffnetem Dach überläuft, wodurch seine Spannung jederzeit sichergestellt sein kann.

Der Teileaufwand ist weiter verringert, wenn das Formteil hinter der Unterstützungsstufe auch noch eine Befestigungseinrichtung für die Verkleidung umfaßt, so daß auch hierfür keine gesonderten Teile erforderlich sind, sondern beispielsweise sehr einfach das Einziehen eines Keders in die Befestigungseinrichtung die Festlegung der Verkleidung bewirken kann.

Die Verkleidung kann vorteilhaft den Spalt zwischen der Kante und dem geöffneten Dach von oben optisch nahezu vollständig abdecken.

Weitere Vorteile und Merkmale der Erfindung ergeben sich aus einem in der Zeichnung zumindest schematisch dargestellten und nachfolgend beschriebenen Ausführungsbeispiel des Gegenstandes der Erfindung.

In der Zeichnung zeigt:
- Fig. 1: ein erfindungsgemäßes Kraftfahrzeug in schematischer, an der vertikalen Längsmittelebene abgebrochener Ansicht von oben bei geöffnetem Dach,
- Fig. 2: eine ähnliche Ansicht wie Fig. 1, jedoch bei geschlossenem Dach,
- Fig. 3: ein Fahrzeug gemäß dem Stand der Technik in ähnlicher Ansicht wie Fig. 1,
- Fig. 4: einen schematisierten und im unteren Bereich abgebrochenen Seitenschnitt im Bereich der vertikalen Längsmittelebene des erfindungsgemäßen Fahrzeugs bei geschlossenem und verriegeltem Dach,
- Fig. 5: eine ähnliche Ansicht wie Fig. 4 bei vollständig geöffnetem Dach,
- Fig. 6: einen Detailausschnitt der hinteren Dachanbindung in der Stellung nach Fig. 4,
- Fig. 7: eine ähnliche Ansicht wie Fig. 6 bei geöffnetem Dach nach Fig. 5,

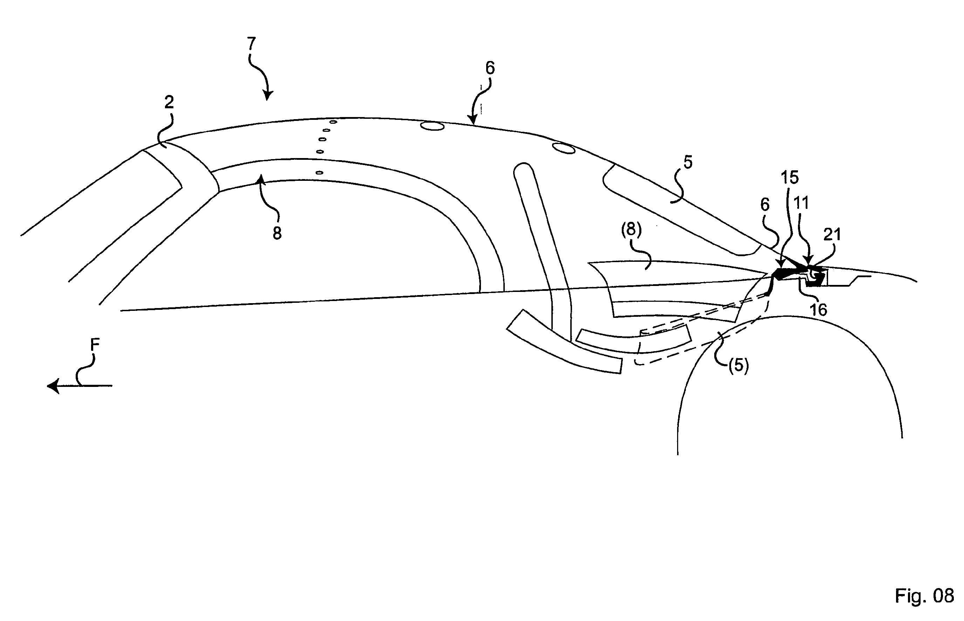

- Fig. 8: eine schematisierte und im unteren Bereich abgebrochene Seitenschnitt in geschlossener und offener Dachstellung nach den Figuren 4 und 5,
- Fig. 9: eine schematisierte perspektivische Ansicht der Heckscheibe und ihrer Anbindung bei geschlossenem und offenem Dach,

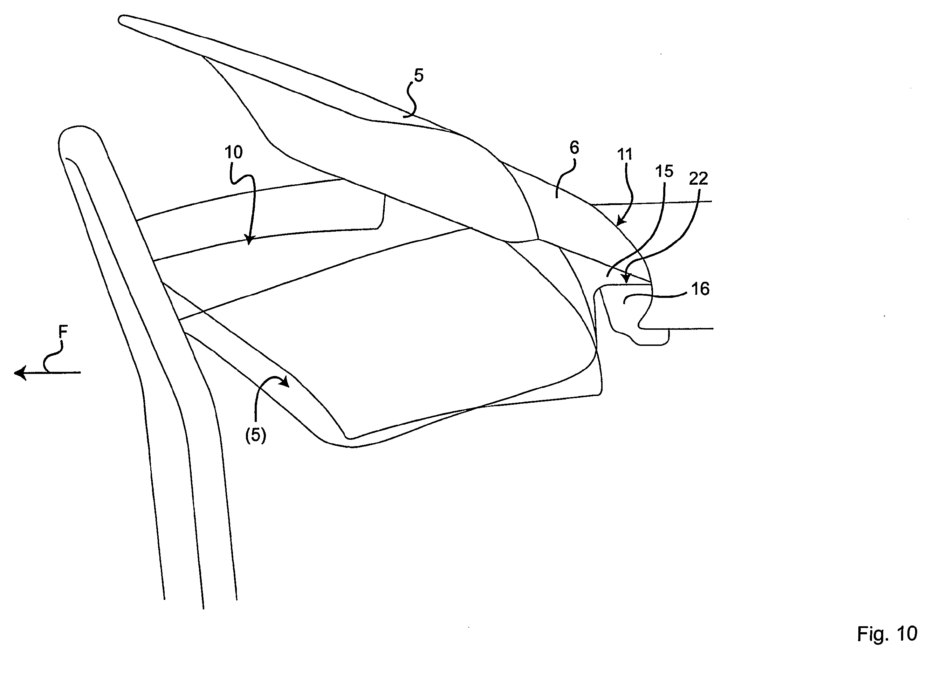

- Fig. 10: eine ähnliche Ansicht wie Fig. 9, jedoch mit in offener Dachstellung zusätzlich eingezeichnetem vorderem Dachbereich,

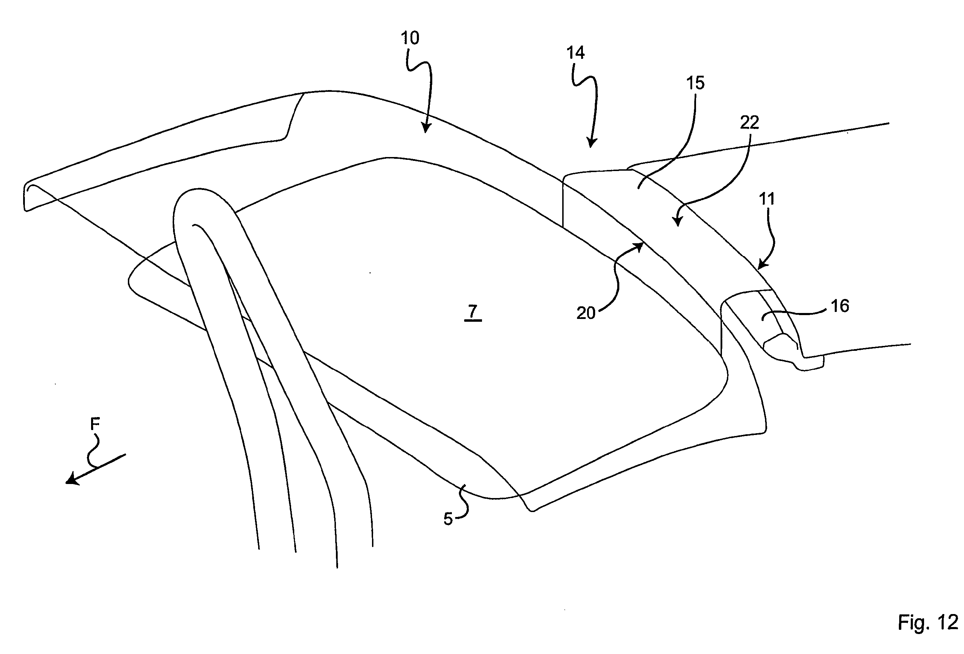

- Fig. 11: eine schematisierte perspektivische Ansicht von schräg oben auf das geöffnete Dach,
- Fig. 12: eine ähnliche Ansicht wie Fig. 11, jedoch mit zusätzlich eingezeichnetem darunter liegendem hinterem Dachbereich,

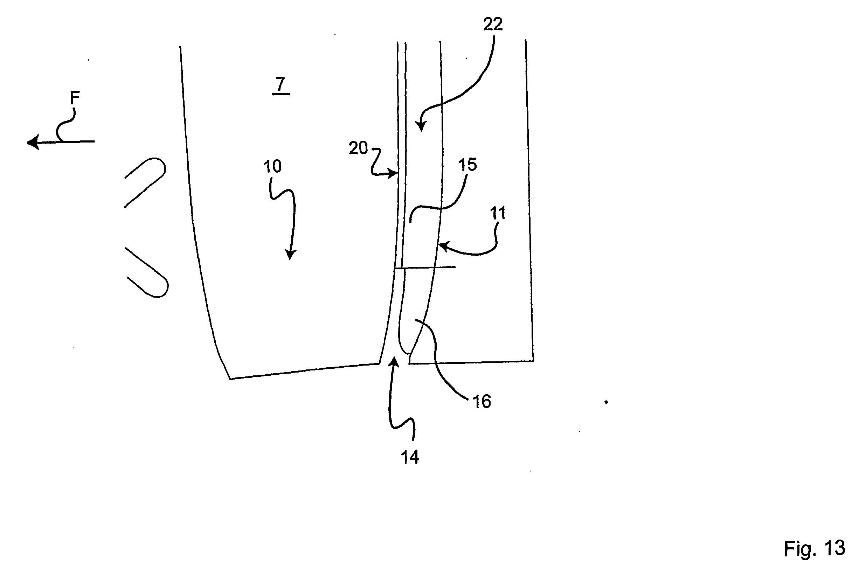

- Fig. 13: eine Draufsicht auf das geöffnete Dach,

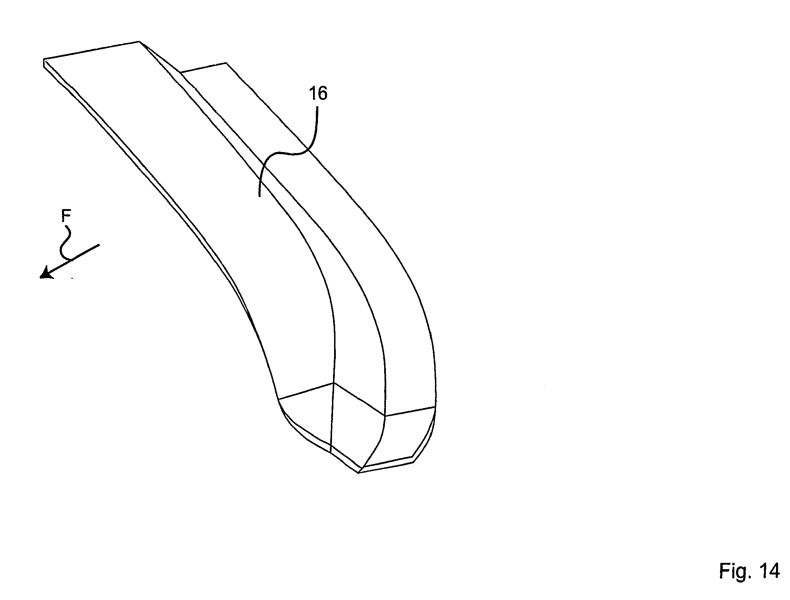

- Fig. 14: eine perspektivische Einzelteilansicht der Unterstützungsstufe,

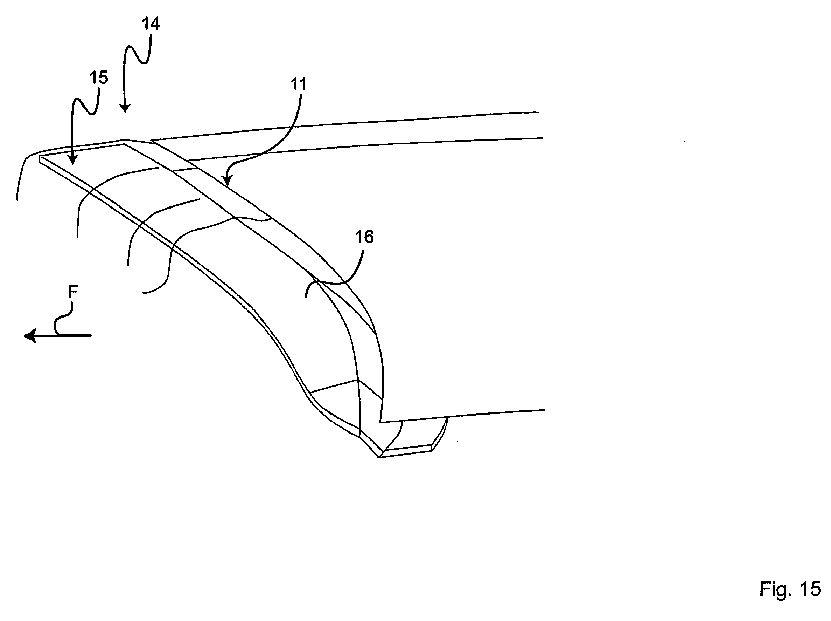

- Fig. 15: das Teil nach Fig. 14 in am Fahrzeug montierter Stellung.

In den Zeichnungsfiguren ist ein zweisitziges Fahrzeug 1 dargestellt. Die Erfindung ist auch auf ein beispielsweise mit einer Rückbank versehenes vier- oder mehrsitziges Cabriolet-Fahrzeug anwendbar.

Das Fahrzeug 1 umfaßt in seinem oberen Bereich und an einen Windschutzscheibenrahmen 2 mittelbar oder unmittelbar angrenzend ein gegenüber der Karosserie 4 bewegliches Dach 3, das außerhalb einer Heckscheibe 5 einen flexiblen Dachbezug 6 umfassen kann.

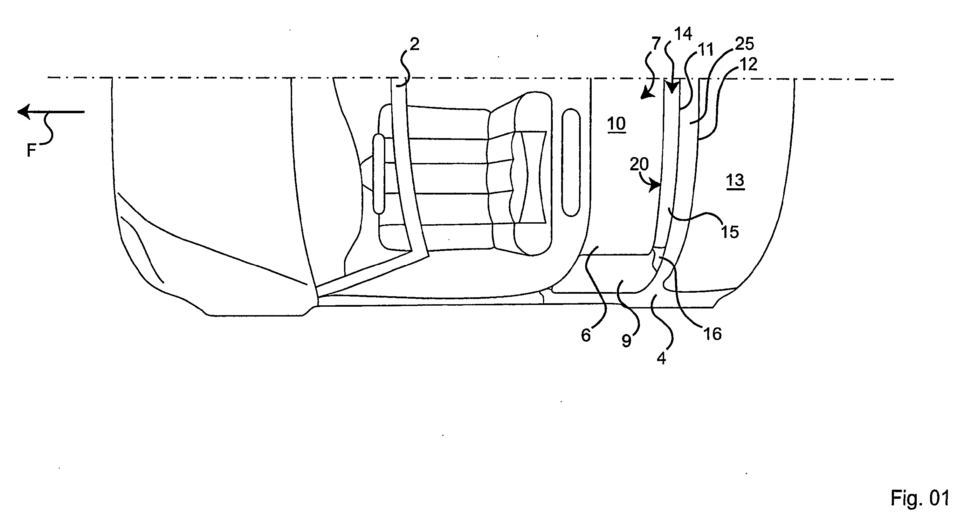

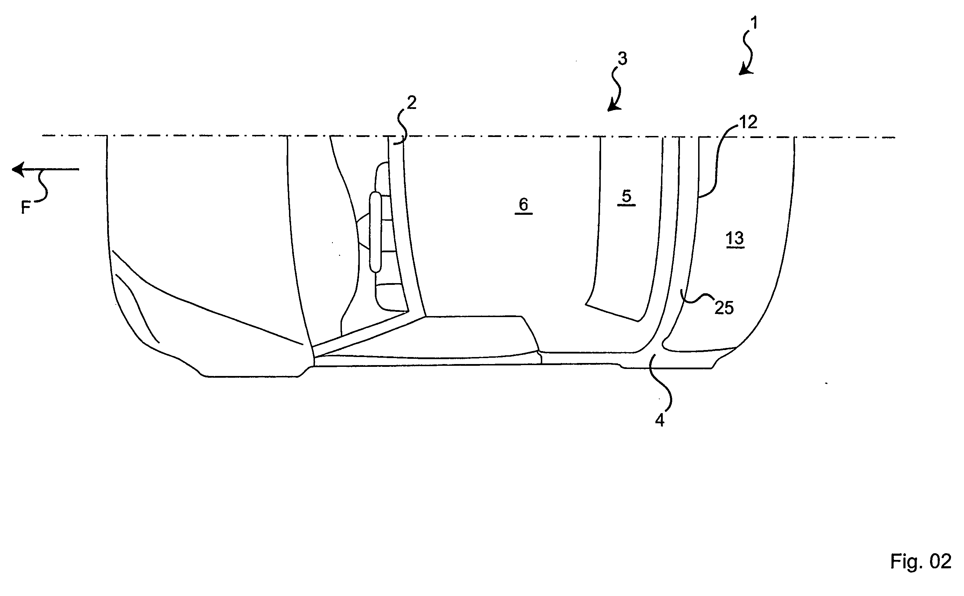

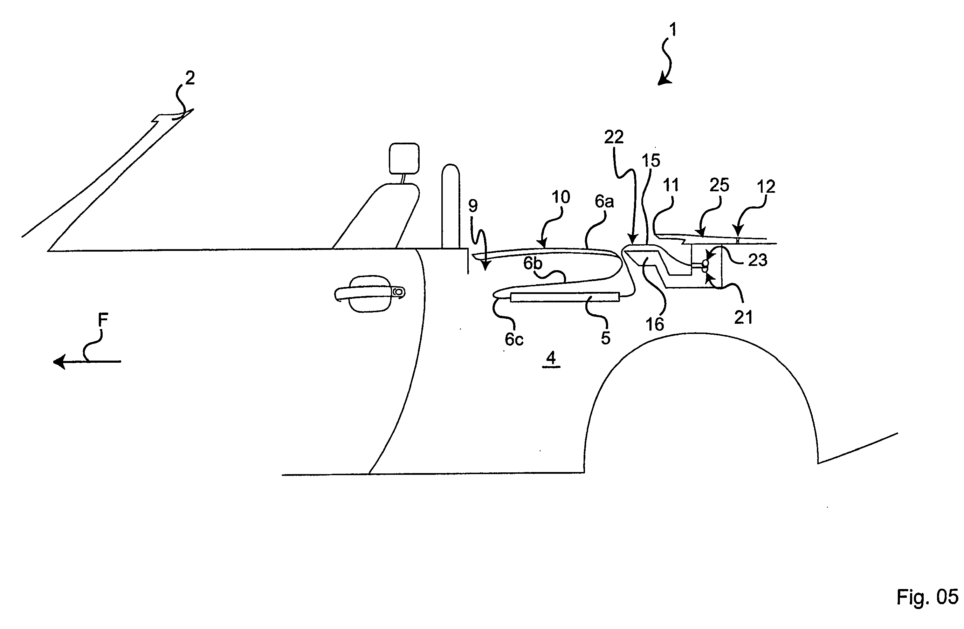

Das Dach 3 enthält in Fahrtrichtung F einen vorderen Dachbereich 7, der zumindest bereichsweise einen vom Bezug 6 übergriffenen starren Endbereich 8, eine sog. Dachspitze, zu seiner Festlegung am Windschutzscheibenrahmen 2 umfaßt. Der vordere Dachbereich 7 ist bei Öffnung des Daches (Übergang von Fig. 2 zu Fig. 1) in gleicher Orientierung wie im geschlossenen Zustand in einer Karosserieausnehmung 9 ablegbar, d. h., daß die bei geschlossenem Dach 3 nach oben und außen zeigende Fläche 10 des vorderen Dachbereichs 7 auch in geöffnetem Zustand des Daches 3 nach oben weist. Das Dach 3 kann hierfür in einer sog. Z-Faltung ablegbar sein, wobei sich der Bezug 6 Z-förmig mit einem oberen Abschnitt 6a über der Dachspitze 8 und einem unteren Abschnitt 6c um die dann zuunterst liegende Heckscheibe 5 und einem diese diagonal verbindenden zwischenabschnitt 6b ablegt (Fig. 5).

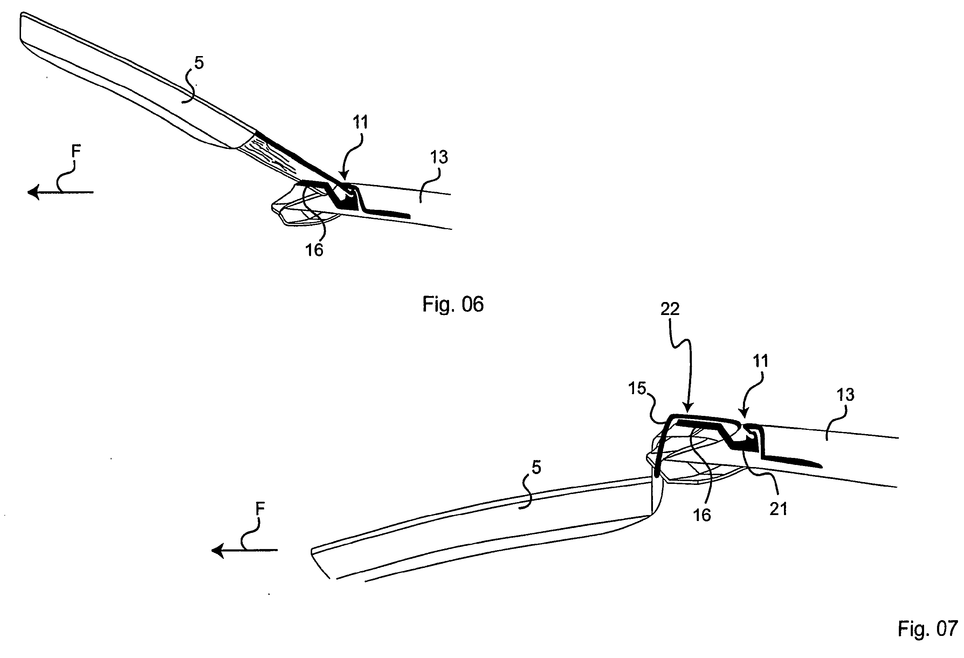

Die zur Aufnahme des geöffneten Daches 3 dienende Karosserieausnehmung 9 ist zumindest rückseitig und teilweise zu den Seiten von einer Kante 11 der Karosserie begrenzt. Diese Kante 11 ist insgesamt derart gekrümmt, daß ihre seitlichen Abschnitte 11a eine in Fahrtrichtung F weisende Komponente umfassen. Sie liegt damit parallel zu einer vorderen Abschlußkante 12 einer Kofferraumklappe 13 und durch einen stabilisierenden Querriegel 25 von dieser beabstandet (Fig. 1) bzw. kann durch diese selbst gebildet sein (Fig. 6, Fig. 7).

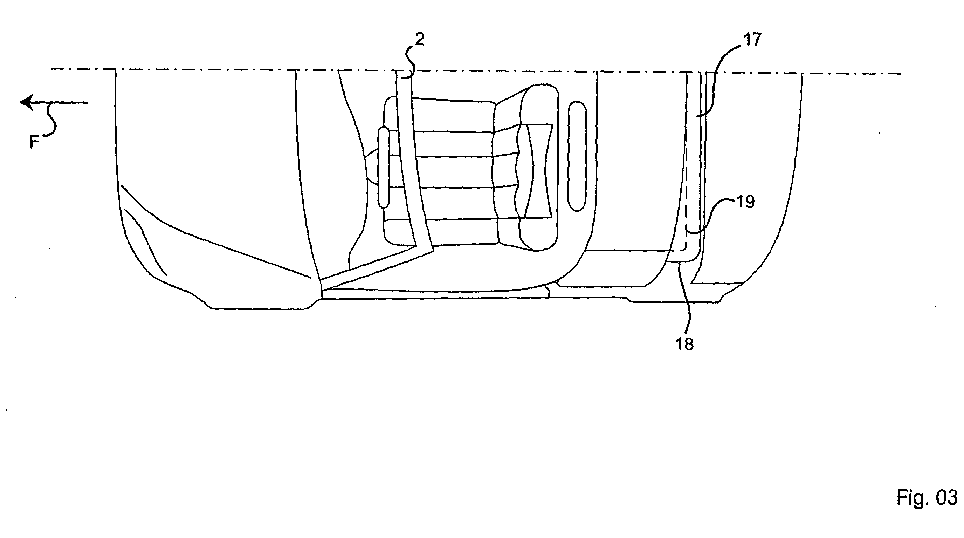

Wenn man ein derartiges Dach 3 öffnen und in der Ausnehmung 9 ablegen will, muß die Begrenzungskante 11 der Karosserie 4 sehr weit nach hinten verlegt sein, oder es müßte, wie in Fig. 3 gezeichnet ist, ein zusätzlicher Schwenkdeckel 17 vorgesehen sein, der zum Durchtritt des Daches 3 öffnen kann und damit eine Kollision der gestrichelt eingezeichneten Eckbereiche 19 mit der Karosserie 4 vermeidet Dies erfordert jedoch den geschilderten zusätzlichen Steuerungsaufwand und bedingt optisch nicht vorteilhafte weitere Fugen 18.

Daher ist erfindungsgemäß statt des Deckels 17 zur Verkleidung eines zwischen dem vorderen Dachteil 7 und der Kante 11 verbleibenden Spalts 14 eine Verkleidung 15 vorgesehen, die eine der Kante 11 zumindest bereichsweise in Fahrtrichtung F vorgeordnete Unterstützungsstufe 16 überläuft. Diese Unterstützungsstufe 16 ist im Ausführungsbeispiel als einstückiges Formteil aus beispielsweise Kunststoff, Magnesium-Druckguß oder Leichtmetallschaum ausgebildet. Die Ausbildung kann jedoch auf viele unterschiedliche Arten erfolgen. Auch kann die Unterstützungsstufe 16 aus einem flexiblen, gummielastischen Material gebildet sein, um so auch einen Druckkontakt des vorderen Dachbereichs 7 mit seiner hinteren Kante 20 und eine damit verbundene Pressung der Verkleidung 15 zu ermöglichen. Des weiteren kann die Unterstützungsstufe 16 auch verlagerbar sein, um in nach hinten verlagerter Stellung eine größere Durchtrittsöffnung für das Dach 3 zu ermöglichen und in nach vorne verlagerter Stellung den Spalt 14 weitestgehend zu überbrücken.

Im Ausführungsbeispiel läuft die Unterstützungsstufe 16 parallel zur Kante 11, ist also zu den Fahrzeugquerseiten ebenfalls in Fahrtrichtung F gekrümmt. Sie kann auch parallel zur hinteren Kante 20 des vorderen Dachbereichs 7 liegen und dann beispielsweise weitgehend geradlinig sein.

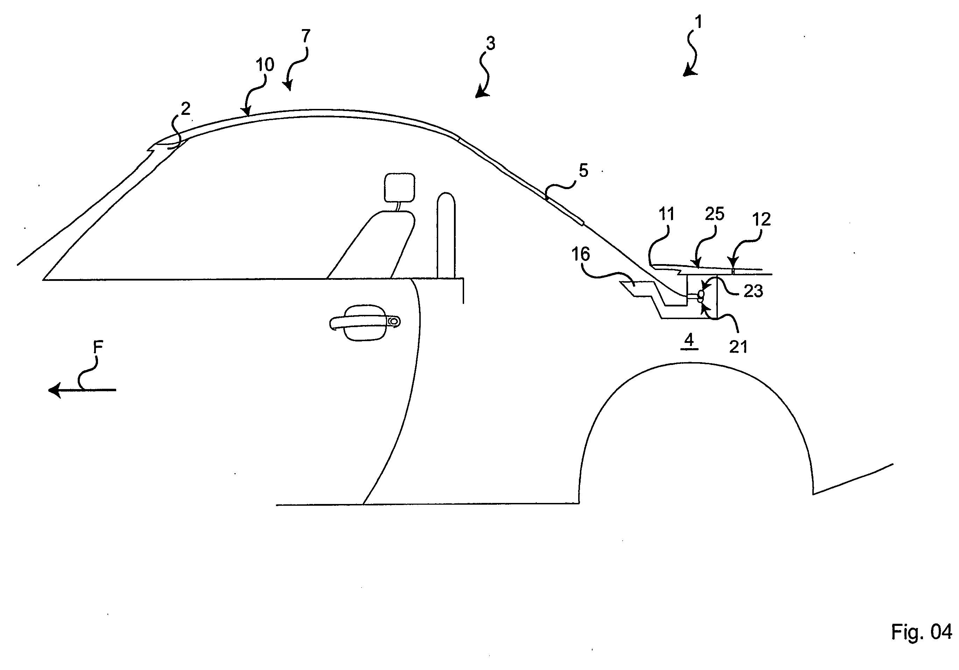

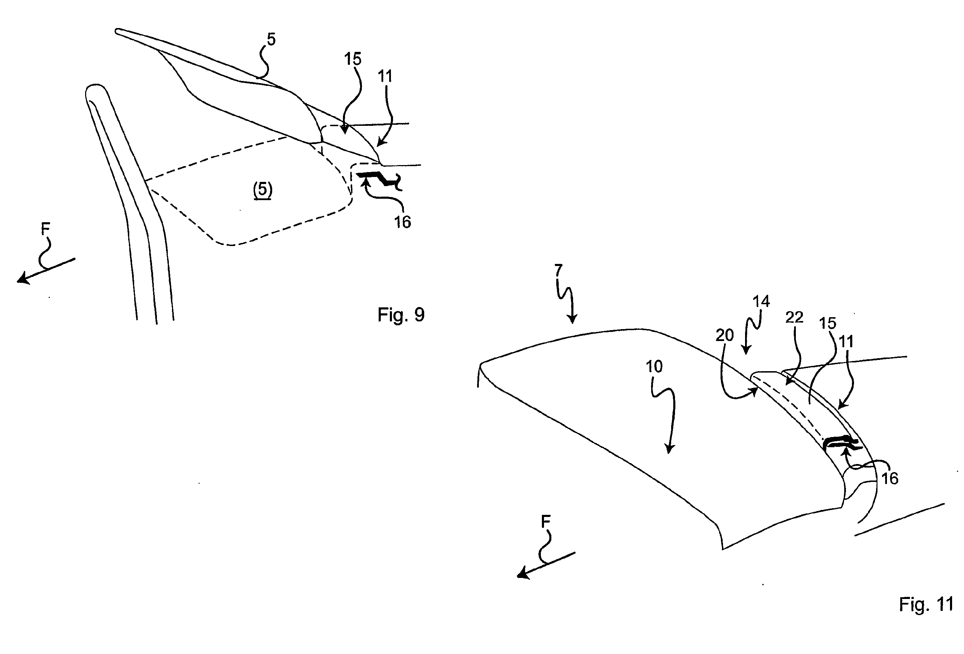

In jedem Fall deckt die von der Stufe 16 unterstützte Verkleidung 15 den Spalt 14 zwischen der hinteren Kante 20 des abgelegten vorderen Dachbereichs 7 und der die Ausnehmung rückseitig begrenzenden Kante 11 der Karosserie 4 zu wesentlichen Teilen ab. Die Verkleidung 15 ist hier als textiler Behang und von einem bei geschlossenem Dach (Fig. 4, Fig. 9) unterhalb der Heckscheibe 5 liegenden Bereich des Dachbezugs 6 gebildet. Es sind daher für die Verkleidung 15 selbst keine zusätzlichen Bauteile oder Montageschritte erforderlich.

Der textile Behang 15 liegt bei geöffnetem Dach (Fig. 5) so, daß er von seiner Anbindung 21 unterhalb der Kante 11 zunächst aufwärts verläuft und eine horizontale Fläche 22 ausbildet, ehe er nach unten hin zu der in Ablagestellung unten liegenden Heckscheibe 5 abfällt. Hierzu kann er insbesondere die oben bereits beschriebene Unterstützungsstufe 16 überlaufen, die dann den Behang 15 unterhalb seiner horizontalen Fläche 22 untergreift und abstützt. Die Fläche 22 liegt in etwa auf gleicher Höhe mit der Außenfläche 10 des vorderen Dachteils 7 und der hinter der Kante 11 liegenden weiteren Außenfläche 24 der Karosserie 4.

Die Anbindung 21 kann insbesondere durch eine Befestigungseinrichtung 23 in dem die Unterstützungsstufe 16 ausbildenden Formteil integral ausgebildet sein, etwa durch einen Eingriffskanal für einen Keder. Das einstückige Formteil kann dann sowohl die Unterstützungsstufe 16 als auch die Befestigungseinrichtung 23 beinhalten und somit besonders montagefreundlich sein. Da die Anbindung 21 unter der Kante 11 liegt, muß sie nicht deren Krümmung folgen, sondern kann je nach Verhältnissen im Bezug 6 auch nahezu geradlinig über die Fahrzeugbreite verlaufen.

Das Formteil kann zudem zwischen der Befestigungsvorrichtung 23 und der Unterstützungsstufe 16 einen Wasserkanal ausbilden.

Die Verkleidung 15 kann auch durch ein gesondertes Teil, etwa ein faltendes Teil, ein Rollo oder dergleichen, gebildet sein.

Die Erfindung ist sowohl für manuell als auch für halb- oder vollautomatisch zu bewegende Dächer 3 verwendbar.

## Patentansprüche

1. Cabriolet-Fahrzeug (1) mit einem zumindest bereichsweise mit einem flexiblen Bezug (6) versehenen Dach (3), das in seinem vorderen Bereich (7) einen vom Bezug (6) übergriffenen starren Bereich (8), eine sog. Dachspitze, umfaßt, wobei der vordere Dachbereich (7) in gleicher Orientierung wie im geschlossenen Zustand in einer Karosserieausnehmung (9) ablegbar ist, die rückwärtig von einer als Vorderkante der nach hinten anschließenden weiteren Karosserieaußenfläche (24) dienenden Kante (11) begrenzt ist,
**dadurch gekennzeichnet,**
**daß** der Kante (11) eine an ihre Kontur angepaßte Unterstützungsstufe (16) für eine von der Kante (11) zu einem Bereich des Daches (3) laufenden flexiblen Verkleidung (15) zumindest bereichsweise vorgeordnet ist.

2. Cabriolet-Fahrzeug (1) nach Anspruch 1
**dadurch gekennzeichnet,**
**daß** die Unterstützungsstufe (16) als Teil eines einstückigen Formteils ausgebildet ist.

3. Cabriolet-Fahrzeug (1) mit einem zumindest bereichsweise mit einem flexiblen Bezug (6) versehenen Dach (3), das in seinem vorderen Bereich (7) einen vom Bezug übergriffenen starren Bereich (8), eine sog. Dachspitze, umfaßt, wobei der vordere Dachbereich (7) in gleicher Orientierung wie im geschlossenen Zustand in einer Karosserieausnehmung (9) ablegbar ist, die rückwärtig von einer als Vorderkante der nach hinten anschließenden weiteren Karosserieaußenfläche (24) dienenden Kante (11) begrenzt ist,
**dadurch gekennzeichnet,**
**daß** als eine Verkleidung ein textiler Behang (15) ausgebildet ist, der einenends über nahezu die gesamte Breite der Ausnehmung (9) unterhalb der hinteren Kante (11) der Ausnehmung (9) festgelegt ist und anderenends an einem Bereich des Daches (3) gehalten ist, wobei er im geöffneten Zustand des Daches über zumindest einen Teil seiner Erstreckung eine im wesentlichen horizontale und gegenüber seiner Anbindung (21) an der Karosserie (4) erhöht gelegene Fläche (22) ausbildet.

4. Cabriolet-Fahrzeug (1) nach einem der Ansprüche 2 oder 3,
**dadurch gekennzeichnet,**
**daß** eine Befestigungseinrichtung (23) für die Verkleidung (15) durch das oder ein Formteil in einem Bereich hinter der oder einer Unterstützungsstufe (16) gebildet ist.

5. Cabriolet-Fahrzeug (1) nach einem der Ansprüche 1 bis 4,
**dadurch gekennzeichnet,**
**daß** die Verkleidung (15) den Spalt (14) zwischen der Kante (11) der Karosserie (4) und dem geöffneten Dach (3) von oben optisch abdeckt.

6. Cabriolet-Fahrzeug (1) nach einem der Ansprüche 1 bis 5,
**dadurch gekennzeichnet,**
**daß** die Kante (11) der Karosserie (4) insgesamt einen Kurvenverlauf aufweist, der zu den Fahrzeugseiten hin in Fahrtrichtung nach vorne laufende Bereiche (11a) umfaßt.

7. Cabriolet-Fahrzeug (1) nach Anspruch 6,
**dadurch gekennzeichnet,**
**daß** die Kante (11) zumindest bereichsweise die Vorderkante einer Kofferraumklappe (13) ist.

8. Cabriolet-Fahrzeug (1) nach einem der Ansprüche 1 bis 6,
**dadurch gekennzeichnet,**
**daß** die Kante (11) zumindest bereichsweise die Vorderkante eines einer Kofferraumklappe (13) vorgeordneten Querriegels (25) der Karosserieaußenfläche (24) ist.

## Claims

1. A cabriolet vehicle (1) with a roof (3) which is equipped, at least in areas, with a flexible covering (6) and which includes in its front area (7) a rigid area (8), a so-called roof summit, overlaid by the covering (6), the front roof area (7) being able to be stored in the same orientation as in the closed state in a car body recess (9) which is bordered to the rear by an edge (11) which serves as the front edge of the further car body outer surface (24) which connects to the rear,
**characterised in that**
a support step (16) which is adapted to the contour of the edge and which is for a flexible cladding (15) running from the edge (11) to an area of the roof (3) is arranged, at least in areas, in front of the edge (11).

2. The cabriolet vehicle (1) according to Claim 1, **characterised in that**
the support step (16) is configured as a part of an integral moulding.

3. A cabriolet vehicle (1) with a roof (3) which is equipped, at least in areas, with a flexible covering (6) and which includes in its front area (7) a rigid area (8), a so-called roof summit, overlaid by the covering, the front roof area (7) being able to be stored in the same orientation as in the closed state in a car body recess (9) which is bordered to the rear by an edge (11) which serves as the front edge of the further car body outer surface (24) which connects to the rear,
**characterised in that**
there is configured, as a cladding, a textile hanging (15) which, at one end, is fixed, over almost the entire breadth of the recess (9), under the rear edge (11) of the recess (9) and, at the other end, is held at an area of the roof (3), whereby it, in the opened state of the roof, over at least a part of its reach, configures a substantially horizontal surface (22) which is situated elevated compared to its connection (21) to the car body (4).

4. The cabriolet vehicle (1) according to one of Claims 2 or 3,
**characterised in that**
that an attachment device (23) for the cladding (15) is formed by the or one moulding in an area behind the or one support step (16).

5. The cabriolet vehicle (1) according to one of Claims 1 to 4,
**characterised in that**
the cladding (15) optically covers, from above, the gap (14) between the edge (11) of the car body (4) and the opened roof (3).

6. The cabriolet vehicle (1) according to one of Claims 1 to 5,
**characterised in that**
the edge (11) of the car body (4) overall has a curve course which includes areas (11a) running forwards in the direction of travel to the vehicle sides.

7. The cabriolet vehicle (1) according to Claim 6, **characterised in that**
the edge (11) is, at least in areas, the front edge of a car boot lid (13).

8. The cabriolet vehicle (1) according to one of Claims 1 to 6,
**characterised in that**
the edge (11) is, at least in areas, the front edge of a car body outer surface (24) cross-bar (25) arranged in front of a car boot lid (13).

## Revendications

1. Véhicule cabriolet (1) avec un toit (3) pourvu au moins en partie d'un revêtement flexible (6), qui comprend dans sa région avant (7) une région rigide (8) recouverte par le revêtement (6), que l'on appelle pointe de toit, la région de toit avant (7) pouvant être déposée suivant la même orientation que dans l'état fermé dans un logement de carrosserie (9), qui est limité à l'arrière par une arête (11) servant de bord avant de la surface extérieure supplémentaire (24) de la carrosserie se raccordant vers l'arrière,
**caractérisé en ce**
**qu'**avant l'arête (11) est disposé au moins en partie un rebord de support (16) adapté à son contour pour un habillage (15) flexible s'étendant depuis l'arête (11) jusqu'à une région du toit (3).

2. Véhicule cabriolet (1) selon la revendication 1,
**caractérisé en ce que**
le rebord de support (16) est réalisé sous forme d'une partie d'une pièce moulée d'une seule pièce.

3. Véhicule cabriolet (1) avec un toit (3) pourvu au moins en partie d'un revêtement flexible (6), qui comprend dans sa région avant (7) une région rigide (8) recouverte par le revêtement (6), que l'on appelle pointe de toit, la région de toit avant (7) pouvant être déposée suivant la même orientation que dans l'état fermé dans un logement de carrosserie (9), qui est limité à l'arrière par une arête (11) servant de bord avant de la surface extérieure supplémentaire (24) de la carrosserie se raccordant vers l'arrière,
**caractérisé en ce**
**qu'**un rideau textile (15) est réalisé en tant qu'habillage, lequel est fixé à une extrémité sur pratiquement toute la largeur du logement (9) en dessous de l'arête arrière (11) du logement (9) et à l'autre extrémité est maintenu à une région du toit (3), et dans l'état ouvert du toit, ce rideau forme sur au moins une partie de son étendue une surface (22) essentiellement horizontale et rehaussée par rapport à son rattachement (21) à la carrosserie (4).

4. Véhicule cabriolet (1) selon l'une quelconque des revendications 2 ou 3,
**caractérisé en ce**
**qu'**un dispositif de fixation (23) pour l'habillage (15) est formé par la ou une pièce moulée dans une région derrière le ou un rebord de support (16).

5. Véhicule cabriolet (1) selon l'une quelconque des revendications 1 à 4,
**caractérisé en ce que**
l'habillage (15) recouvre optiquement par le dessus la fente (14) entre l'arête (11) de la carrosserie (4) et le toit ouvert (3).

6. Véhicule cabriolet (1) selon l'une quelconque des revendications 1 à 5,
**caractérisé en ce que**
l'arête (11) de la carrosserie (4) présente dans l'ensemble une allure courbée qui comprend des régions (11 a) s'étendant vers les côtés du véhicule vers l'avant dans la direction de conduite.

7. Véhicule cabriolet (1) selon la revendication 6,
**caractérisé en ce que**
l'arête (11) est au moins en partie le bord avant d'un capot de coffre à bagages (13).

8. Véhicule cabriolet (1) selon l'une quelconque des revendications 1 à 6,
**caractérisé en ce que**
l'arête (11) est au moins en partie le bord avant d'une traverse (25) de la surface extérieure (24) de la carrosserie, placée avant le capot de coffre à bagages (13).
